Europäisches Patentamt

(19) European Patent Office

Office européen des brevets

(11) Publication number : **0 494 524 A2**

(12) **EUROPEAN PATENT APPLICATION**

(21) Application number : **91311688.5**

(22) Date of filing : **17.12.91**

(51) Int. Cl.[5] : **G01N 21/85**

(30) Priority : **10.01.91 GB 9100502**

(43) Date of publication of application :
**15.07.92 Bulletin 92/29**

(84) Designated Contracting States :
**AT BE CH DE DK ES FR GB GR IT LI LU NL SE**

(71) Applicant : **IMPERIAL CHEMICAL
INDUSTRIES PLC
Imperial Chemical House, Millbank
London SW1P 3JF (GB)**

(72) Inventor : **King, Peter William Burt
9 Lynton Crescent
Widnes, Cheshire WA8 7NN (GB)**

(74) Representative : **Collingwood, Anthony Robert
et al
ICI Group Patents Services Dept. PO Box 6
Shire Park Bessemer Road
Welwyn Garden City Herts, AL7 1HD (GB)**

(54) **Monitoring device.**

(57)    An in-line device for detecting the presence, and more particularly for monitoring the concentration, of one or more components in a fluid mixture, the device comprising at least two substantially monochromatic light sources (2), a probe (10) comprising a light conducting channel (9) optically connected to receive the light from the sources and arranged to allow light to interact with the fluid mixture, and weans (16) for analysing the light received from the light conducting channel.

One of the light sources functions as a reference and the device preferably further comprises means for splitting the light from each light source into an analysis portion and a control portion, the analysis portion from each light source being transmitted to the light conducting channel and the control portion being transmitted to the analysis means, so that all system variables other than the absorbance of the fluid mixture are compensated for.

This invention relates to an in-line device for detecting the presence of one or more fluid components in a fluid mixture, and more particularly for monitoring the concentration of one or more fluid components in a fluid mixture, the components of which may be known.

There is often a requirement for monitoring the presence and/or concentration of the components of a fluid mixture whilst, for example, the fluid is being transported in pipelines or other vessels, for example the concentration of caustic soda in halogen scrubbers, or in order to certify the proportions of the components in a fluid product mixture, for example a solvent mixture such as water and acetone.

Many methods for such monitoring are based on the principle that each and every chemical substance may be characterised by the particular wavelengths of light which it absorbs, particularly light in the visible and infra-red regions of the electromagnetic spectrum. Furthermore, an indication of the amount of the chemical present may be obtained by a measure of the intensity of the absorption. It is with a device which operates on this principle that the present invention is concerned.

In the past, techniques for monitoring the liquid component of a fluid mixture based on the above principle have involved taking a sample from the mixture and subjecting the sample to spectrophotometry. However, there are problems associated with taking such samples, particularly where the components of the mixture are corrosive or in other ways hazardous. In order to overcome problems associated with obtaining and handling such samples, techniques have been suggested for monitoring the mixture whilst in the pipeline or vessel. It is known for example to provide a sample cell at the end of a probe which may be inserted into the pipeline or vessel in which the mixture is carried. In the use of such an instrument, a broadband light source is transmitted through the probe across the sample cell and is reflected back across the sample cell and along the probe to a spectrophotometer where it is analysed.

The use of a broadband light source necessitates the use of expensive spectrophotometer equipment to analyse the signal returned from the sample cell and such equipment is bulky and not easily transported for use in various locations/applications. Furthermore such spectrophotometers are complex devices which have many moving parts which may go wrong and are therefore not as reliable as may be desired.

The present invention is intended to remedy these drawbacks and provides a device for the in-line monitoring of a fluid component of a fluid mixture which is of simple construction and hence increased reliability compared to known devices and which may be of much greater intrinsic safety due to a lower power requirement for its operation.

According to the present invention there is provided a device for detecting a fluid component in a fluid mixture, the device comprising at least two substantially monochromatic light sources, a probe comprising a light conducting channel optically connected at one end to receive the light from the sources and arranged so as to allow light to interact with the fluid mixture and return back along the light conducting channel, and means for analysing the light received from the light conducting channel.

It is to be understood that as used herein, by "light" threr is meant electromagnetic radiation which may have a wavelength within the visible part of the spectrum, or in a part of the spectrum other than the visible, for example the infra-red, and in particular the near infra-red.

A device according to the invention is particularly suitable for measuring and monitoring the concentration of the components in a fluid mixture, as well as simply detecting the presence thereof.

The device is typically used to determine the concentration of the components of a binary or a tertiary mixture, and in particular the concentration of a single component in such a mixture but it may be used to determine the concentration of some or all of the components in a mixture having more than three components.

Where the device is to be used for determining the concentrations of the components of a binary mixture, then two monochromatic light sources may be used. In this case, one light source may be selected which emits light of a wavelength characteristically absorbed by the component to be measured. Preferably a wavelength is chosen which is within a clear sharp absorption band of the component to be measured and which is not absorbed by any of the other components in the mixture. The other source is selected which emits light at a reference wavelength in order that any variations in measurement due to factors other than the concentration of the component to be measured will affect both wavelengths equally and will therefore be compensated for. The particular wavelength at which the reference source is set is preferably a wavelength in a neutral part of the spectrum of the component to be measured, that is, at a wavelength not absorbed by the component, and which is also close to but separated from the measurement wavelength so that any variations in the sensitivity of the analysis means at different wavelengths is minimised. In such a two component system, a measurement of concentration of one component enables the concentration of the other component to be calculated without further measurement.

Where the device is for the measurement of the concentrations of the liquid components in a tertiary mixture, then three light sources may be used. A first source is selected which emits light at a wavelength characteristically absorbed by a first component, a second is selected which emits light at a wavelength characteristically absorbed by a second component and the third is selected which emits light at a reference wavelength. The concentrations of two components are thereby measured and the third calculated.

Where therefore the concentration of each and every component of a mixture comprising "n" components is desired to be determined, it is generally necessary to measure all but one of the components using the device and then for the other component to be calculated. In this situation, there will be "n" light sources. There will be one light source for each of "n-1" of the components in the mixture, the other component being determined by calculation, and one additional reference light source.

Where it is not desired to determine the concentrations of all the components of a fluid mixture, there may generally be one light source for each component whose concentration is to be determined and one additional reference light source.

In, for example, a binary mixture, the analyser functions by comparing the absorption of the fluid mixture at the reference and measurement wavelengths. The measurement wavelength actually performs the concentration measurement whilst the reference acts as a control for all the many system variables.

From Beer Lambert's law, it can be shown that the concentration of the component to be measured will be proportional to:

$$\text{Log } (Ir/Im)$$

where Im is the intensity transmitted at the measurement wavelength, and Ir is the intensity transmitted at the reference wavelength.

The constant of proportionality may be determined by calibration.

In a preferred embodiment of the invention the device further comprises means for splitting the light from each source into an analysis portion and a control portion, the analysis portions being transmitted to the light conducting channel, and the control portions being transmitted to the analysis means, in order that any variation in the light emitted form the sources, for example with time or temperature, may be compensated for. In this case, an analysis detector measures the energy of the light absorbed by the fluid mixture and a control detector measures the light energy emitted at the fluid mixture. In this case the analyser computes its results from the outputs of the two detectors as follows:

$$( \text{Log Ref A} - \text{Log Meas A}) + ( \text{Log Meas C} - \text{Log Ref C})$$

Where

Ref A = Reference signal received by Analysis detector

Meas A = Measurement signal received by Analysis detector

Ref C = Reference signal received by Control detector

Meas C = Measurement signal received by Control detector.

This is a logarithmic ratio of the four signals. The result is fully compensated for all system variations. For example, any change in the output of the light sources is ratioed out and has no effect, similarly any change in the analysis light path caused by movement or dirt on the surfaces will be compensated for. The only variable is the spectral absorption of the fluid mixture which is exactly what is required to be measured.

The analysis and control detectors may be germanium photovoltaic detectors in which case the form of the output of the detectors will be an electric current, the size of which is directly proportional to the intensity of the light incident upon the detector. The electric current output may be further transformed into a voltage by a pre-amplifier, and the voltage signal may then be inputed into a computer which performs the logarithmic calculations necessary in order to arrive at a measure of the absorbance of the fluid mixture and hence the concentration of the component being measured.

In a preferred embodiment of the invention, each light source comprises a light emitting diode with an associated filter/lens combination. Light emitting diodes are solid state devices which emit narrow bandwidth light, sometimes called "quasi-monochromatic light" in the visible and near infra red regions of the spectrum up to approximately 3.5 microns. The bandwidth of the light emitted by each LED may be further narrowed by the use of an associated filter/lens combination. Preferably the bandwidth of light emitted by each source comprising LED and filter is not greater than 2% of the particular desired wavelength. LED's are preferred as light sources since they are solid state devices which operate at very low power, for example a current of 75 milli amps and 2 Volts. The use of LED's therefore leads to greater intrinsic safety of the device and to a much more reliable system than with conventional light sources.

The means for dividing the light emitted from each source into a control portion and a measurement portion may, for example, be conventional half-silvered mirrors positioned at 45° to the incident light so that a portion of the light incident on the mirror is transmitted through it and a portion is reflected in a direction perpendicular to the transmitted light. Alternatively, and in a preferred embodiment of the invention so as to avoid the inherent light losses associated with half-silvered mirrors, the light from each source is emitted into a bundle of optical fibres. The optical fibre bundle from each source is then split into a control bundle and an analysis bundle. The control bundles from each source may then be combined and taken to a control detector. The analysis bundles of optical fibres from each source may be combined and optically connected to the light conducting channel. Preferably, since the light which is guided to the control detector is not subject to the same potential energy losses as the light guided to the light conducting channel, the optical fibre bundles from each source may be split in a proportion so as to guide a greater proportion of the light emitted by each source to the light conducting channel than to the control detector so that approximately equal amounts of energy may then be received by each detector. The optical fibre bundles from each source may, for example, be split in a proportion so as to guide from 5% to 25% of the light emitted by each source to the control detector and 75% to 95% of the light emitted by each source to the light conducting channel.

The light conducting channel of the probe of the device may be arranged to allow light to, interact with the fluid mixture by having a sample cell, formed by a gap between the end of the light conducting channel and a reflector separated from the end of the light conducting channel. The reflector provides the means for returning the light back along the light conducting channel. Light is guided along the light conducting channel and into the fluid mixture present in the sample cell. The light is then reflected by the reflector and returned along the light conducting channel from the other end of which it is guided to an analysis detector.

The light conducting channel of the probe may be a glass or transparent plastics rod. Alternatively, it may comprise an optical fibre or a polished metal tube, for example a polished stainless steel tube.

The light conducting channel is preferably encased in a sheath of a material which possesses chemical resistance to the components of the mixture in which the probe is inserted so as to prevent corrosion or other damage to the probe. The particular material from which the sheath is made will depend on the particular components of the mixture being monitored but suitable materials include polyvinylidene fluoride, Halar and Quartz, or a metal, for example, stainless steel or titanium . Where the light conducting channel is encased in a sheath of one of the above materials, an opening may be provided in the sheath at the tip of the light conducting channel adjacent the sample cell in order to allow transmission of light through the sample cell.

The reflector may be any material which is capable of reflecting light and which possesses significant resistance to corrosive materials and has substantial durability. The particular material of the reflector will depend therefore upon the components of the fluid mixture in which the probe is immersed. The material may, for example be stainless steel or glass and where one or more of the components of the fluid mixture are highly corrosive, for example a strong acid such as fuming nitric acid, the reflector may be a Nb mirror.

In operation of the device, each light source may preferably be activated in sequence to produce a pulse of monochromatic light which is then divided into control and analysis portions. The control portion may be fed along the control bundle of optical fibres to a control detector and the analysis portion may be guided by the analysis bundle of optical fibres to and along the light conducting channel. The light passes through the fluid mixture, may be reflected by the reflector and returns along the light conducting channel from which it is fed to an analysis detector. Each pulse of light from each source is therefore separated in time from the pulses from other sources and there is no need to provide a means for separating the light before it is fed to the detector, which would require the use of complex optical parts and would inhibit the reliability of the device.

The provision of LED's as the light sources enables the sequencing of the sources to be effected rapidly since LED's may be switched on and off in the order of nanoseconds.

In an alternative embodiment of the probe, which is particularly useful with materials, for example, dyes, which absorb light extremely strongly, the probe may simply comprise a light conducting channel made from a material having a greater refractive index than the fluid mixture in which it is immersed, the probe then operating under the principle of Attenuated Total Internal Reflectance. Light is received by the light conducting channel along a path such that it is incident upon the interface between the light conducting channel and the fluid mixture at an angle greater than the critical angle and the material from which the light conducting channel is constructed is one having a greater refractive index than the fluid mixture such that at the interface between the light conducting channel and the fluid mixture, the light travels a distance approximately half a wavelength into the fluid mixture before being reflected back into the light conducting channel. The light may therefore be attenuated by the fluid mixture each time it is incident upon the light conducting channel/fluid mixture interface. Suitable materials having sufficiently large refractive indices include sapphire and zinc selenide. In operation of the probe, light travels along the probe and undergoes multiple reflections at the interfaces with the fluid mixture before being reflected by the end of the light conducting channel whereupon it travels back along the light conducting channel.

By way of example only, an in-line device in accordance with the invention will now be described with reference to the accompanying drawing, the sole figure of which is a schematic perspective view of an in-line device of the invention positioned in a pipeline ready for operation.

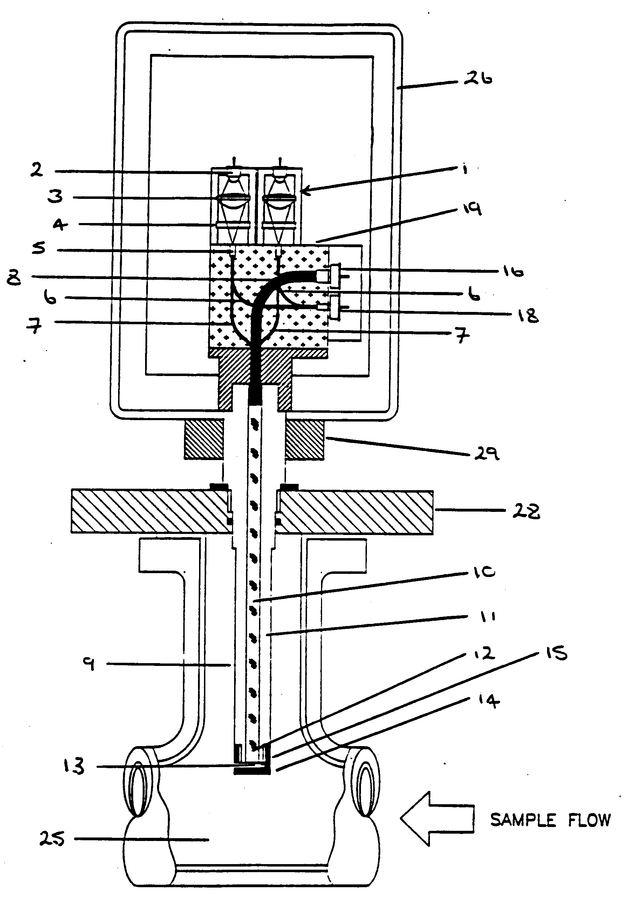

In Fig 1, a device is shown positioned in a pipeline (25) ready to measure the concentrations of the components of a binary mixture being transported through the pipeline. The device illustrated comprises two light sources (1). Each light source comprises an LED (2), a filter (3) and a lens (4). When activated by associated electronics (not shown), each LED in sequence , emits light of wavelength and bandwidth according to the particular specification of the LED; the bandwidth of which is then further narrowed by a monochromatic filter and focused by the lens. The light from each light source is then transmitted into an optical fibre bundle (5) comprising 100 individual optical fibres which receives the monochromatic light from the source. Each optical fibre bundle is then divided into a control bundle of fibres (6), comprising 10 fibres and a measurement bundle of fibres (7) comprising 90 fibres. Each control bundle and the light carried thereby is fed directly to a control detector (18). The measurement bundle and the light carried thereby is fed to a fibre optic rod (10) provided in a probe (9). The light sources, optical fibre bundles, detectors and any ancillary electronics for sequentially activating the LED's are housed in a weatherproof casing (26). The probe (9) is inserted into the pipeline through a suitable orifice (27) so that the sample gap is located in the flow stream of the mixture to be monitored. The device is held in position relative to the pipeline by a suitable mounting (28), and the probe may also be held in position relative to the apparatus housed in the weatherproof casing by a mounting (29). The fibre optic rod is encased in a sheath of stainless steel (11) which serves to protect the fibre optic from corrosion by the components of the mixture in which it is immersed. Light from the measurement bundle of each light source is transmitted along the fibre optic rod and through an opening (12) provided in the sheath to allow light to be transmitted across a sample gap (13). A stainless steel mirror (14) is held in position separated from and parallel to the opening(12) by a connecting piece (15). Light is reflected by the mirror and is returned back along the fibre optic rod and along further optical fibre (8) to an analysis detector (16). The analysis and control detectors are Germanium photovoltaic detectors which convert the energy of the light incident on them into electric current which is then converted into a voltage in a pre-amplifier (not shown) and fed to a computer (not shown) which performs the logarithmic calculation required to arrive at a measure of the absorption of the fluid mixture.

**Claims**

1. A device for detecting a fluid component in a fluid mixture, the device comprising at least two substantially monochromatic light sources, a probe comprising a light conducting channel optically connected at one end to receive the light from the sources and arranged so as to allow light to interact with the fluid mixture and return back along the light conducting channel, and means for analysing the light received from the light conducting channel.

2. A device as claimed in claim 1 in which each light source comprises a light emitting diode.

3. A device as claimed in claim 2 in which each light source further comprises a filter and lens combination.

4. A device as claimed in any one of claims 1 to 3 in which the bandwidth of the light emitted by each light source is not greater than 2% of the desired wavelength.

5. A device as claimed in any one of claims 1 to 4 and which further comprises means for splitting the light from each light source into an analysis portion and a control portion, the analysis portion from each light source being transmitted to the light conducting channel and the control portion from each light source being transmitted to the analysis means.

6. A device as claimed in claim 5 in which the light from each source is emitted into an optical fibre bundle.

7. A device as claimed in claim 6 in which the optical fibre bundle is split into a control bundle and an analysis bundle.

8. A device as claimed in claim 7 in which the optical fibre bundle is split in a proportion so as to guide between 5% and 25% of the light emitted from each source to the analysis means and between 75% and 95% to the light conducting channel.

9. A device as claimed in any one of claims 1 to 8 claim in which the light conducting channel comprises an optical fibre.

10. A device as claimed in any one of claims 1 to 9 in which the probe comprises a sampling gap formed between the end of the light conducting channel and a reflector separated from the end of the light conducting channel whereby to allow light to interact with the fluid mixture.

11. A device as claimed in any one of claims 1 to 8 in which the light conducting channel comprises a material having a greater refractive index than the fluid mixture in which it is immersed whereby to allow the light to interact with the fluid mixture.

12. A device as claimed in any one of claims 1 to 11 in which in operation of the device each light source is sequentially activated to produce a pulse of light separated in time from the pulses of light emitted from the other sources.

SAMPLE FLOW